# EUROPEAN PATENT APPLICATION

(11) **EP 4 512 666 A1**
(43) Date of publication of application: **26.02.2025**
(21) Application number: 22948447.2
(22) Date of filing: 29.06.2022
(51) Int. Cl.: B60R 1/06

(54) **ELECTRONIC REARVIEW MIRROR SYSTEM AND VEHICLE**

(71) Applicant: Shenzhen Yinwang Intelligent Technologies Co., Ltd., Shenzhen, Guangdong 518129 (CN)
(72) Inventor: JIA, Xiaolin, Shenzhen, Guangdong 518129 (CN)
(74) Representative: Pfenning, Meinig & Partner mbB
(86) International application number: PCT/CN2022/102561
(87) International publication number: WO 2024/000333

(57) **Abstract**

This application provides an electronic rearview mirror system and a vehicle, and relates to the field of vehicle technologies. The electronic rearview mirror system includes a plurality of cameras, a plurality of displays, a first controller, and a second controller. The plurality of cameras are configured to collect an image at a left rearview angle and an image at a right rearview angle outside a vehicle. The first controller and the second controller are configured to: obtain information about the images from the plurality of cameras and perform image processing on the information. The first controller and the second controller are further configured to serve as controllers of an in-vehicle system different from the electronic rearview mirror system. The plurality of displays are configured to display images obtained after the image processing. A controller of another in-vehicle system on the vehicle is reused to implement a function of an electronic rearview mirror, so that the electronic rearview mirror ECU does not need to be separately deployed. This reduces costs of the electronic rearview mirror ECU, and reduces costs of deploying the electronic rearview mirror system on the vehicle.

## Description

### TECHNICAL FIELD

This application relates to the field of vehicle technologies, and in particular, to an electronic rearview mirror system and a vehicle.

### BACKGROUND

With continuous development of vehicle technologies, currently, some countries have allowed use of an electronic rearview mirror system instead of a lens-reflective rearview mirror.

Currently, a known independent electronic rearview mirror system includes a left camera, a right camera, an electronic rearview mirror electronic control unit (electronic control unit, ECU), a left visual field display, and a right visual field display. However, costs of deploying such an independent electronic rearview mirror system on a vehicle are high.

### SUMMARY

This application provides an electronic rearview mirror system and a vehicle, to integrate functions of an electronic rearview mirror into another in-vehicle system, to reduce costs of deploying the electronic rearview mirror.

This application provides an electronic rearview mirror system. The system includes a plurality of cameras, a plurality of displays, and at least one controller. The plurality of cameras are configured to collect an image at a left rearview angle and an image at a right rearview angle outside a vehicle. The at least one controller is configured to: obtain information about the images from the plurality of cameras and perform image processing on the information. The at least one controller is further configured to serve as a controller of an in-vehicle system different from the electronic rearview mirror system. The plurality of displays are configured to display images obtained after the image processing.

According to a first aspect, this application provides an electronic rearview mirror system. The system includes a plurality of cameras, a plurality of displays, a first controller, and a second controller. The plurality of cameras are configured to collect an image at a left rearview angle and an image at a right rearview angle outside a vehicle. The first controller and the second controller are configured to: obtain information about the images from the plurality of cameras and perform image processing on the information. The first controller and the second controller are further configured to serve as controllers of an in-vehicle system different from the electronic rearview mirror system. The plurality of displays are configured to display images obtained after the image processing.

Based on the foregoing solution, a controller of another in-vehicle system on the vehicle is reused to implement a function of an electronic rearview mirror, so that the electronic rearview mirror ECU does not need to be separately deployed. This reduces costs of the electronic rearview mirror ECU, and reduces costs of deploying the electronic rearview mirror system on the vehicle. In addition, two controllers of another in-vehicle system on the vehicle are reused, so that when one controller is faulty, the other controller can still implement image processing on information about an image collected by a camera. This improves reliability of the electronic rearview mirror system while reducing costs.

With reference to the first aspect, in some possible designs, that the first controller and the second controller are further configured to serve as controllers of an in-vehicle system different from the electronic rearview mirror system includes: The first controller and the second controller are further configured to serve as controllers of an advanced driver assistance system (advanced driver assistance system, ADAS). Alternatively, the first controller is further configured to serve as a controller of an ADAS, and the second controller is further configured to serve as a controller of an in-vehicle infotainment (in-vehicle infotainment, IVI) system.

With reference to the first aspect, in some possible designs, the plurality of cameras include at least one left camera and at least one right camera. The at least one left camera is configured to collect the image at the left rearview angle. The at least one right camera is configured to collect the image at the right rearview angle. The plurality of displays include a left visual field display, a right visual field display, and a human-machine interaction (human-machine interaction, HMI) display. The left visual field display is configured to display the image obtained after the image processing is performed on the information about the image at the left rearview angle. The right visual field display is configured to display the image obtained after the image processing is performed on the information about the image at the right rearview angle. The HMI display is configured to: when the left visual field display is faulty, display the image obtained after the image processing is performed on the information about the image at the left rearview angle, and/or configured to: when the right visual field display is faulty, display the image obtained after the image processing is performed on the information about the image at the right rearview angle. Both the left visual field display and the right visual field display are connected to the first controller. The HMI display is connected to the second controller.

In this design manner, an HMI display of another in-vehicle system on the vehicle is further reused, to further improve reliability of the electronic rearview mirror system.

Optionally, both the at least one left camera and the at least one right camera are connected to the first controller and the second controller.

Optionally, the at least one left camera includes a first left camera and a second left camera, and the at least one right camera includes a first right camera and a second right camera. The first left camera is configured to collect the image at the left rearview angle. The second left camera is configured to collect the image at the left rearview angle when the first left camera or the left visual field display is faulty. The first right camera is configured to collect the image at the right rearview angle. The second right camera is configured to collect the image at the right rearview angle when the first right camera or the right visual field display is faulty. Both the first left camera and the first right camera are connected to the first controller, and both the second left camera and the second right camera are connected to the second controller.

Optionally, the first controller and the second controller are packaged in different boxes or a same box.

As an example rather than a limitation, when the first controller is a reused controller of the ADAS, and the second controller is a reused controller of the IVI system, the first controller and the second controller may be packaged in different boxes. When the first controller and the second controller are reused controllers of the ADAS, the first controller and the second controller may be packaged in different boxes, or the first controller and the second controller may be packaged in a same box. This is not limited in this embodiment of this application.

Optionally, the second controller is further configured to perform fault detection to determine that at least one of the following is faulty: one or more of the plurality of cameras, the first controller, the left visual field display, or the right visual field display.

The first controller may serve as a primary controller in the electronic rearview mirror system, and the second controller may serve as a secondary controller in the electronic rearview mirror system. The second controller may perform fault detection on one or more of the plurality of cameras, the first controller, the left visual field display, or the right visual field display periodically or in real time, to ensure that when it is determined that the one or more of the plurality of cameras, the first controller, the left visual field display, or the right visual field display is faulty, a spare part is started to replace a faulty part, to improve reliability of the electronic rearview mirror system.

According to a second aspect, this application provides an electronic rearview mirror system. The system includes a plurality of cameras, a plurality of displays, and a first controller. The plurality of cameras are configured to collect an image at a left rearview angle and an image at a right rearview angle outside a vehicle. The first controller is configured to: obtain information about the images from the plurality of cameras and perform image processing on the information. The first controller is further configured to serve as a controller of an in-vehicle system different from the electronic rearview mirror system. The plurality of displays are configured to display images obtained after the image processing.

Based on the foregoing solution, a controller of another in-vehicle system on the vehicle is reused to implement a function of the electronic rearview mirror. An electronic rearview mirror ECU does not need to be separately deployed, so that costs of the electronic rearview mirror ECU are reduced, and costs of deploying the electronic rearview mirror system on the vehicle can be reduced.

With reference to the second aspect, in some possible designs, that the first controller is further configured to serve as a controller of an in-vehicle system different from the electronic rearview mirror system includes: The first controller is further configured to serve as a controller of an ADAS. Alternatively, the first controller is further configured to serve as a controller of an IVI system.

With reference to the second aspect, in some possible designs, the plurality of cameras include at least one left camera and at least one right camera. The at least one left camera is configured to collect the image at the left rearview angle. The at least one right camera is configured to collect the image at the right rearview angle. The plurality of displays include a left visual field display, a right visual field display, and an HMI display. The left visual field display is configured to display the image obtained after the image processing is performed on the information about the image at the left rearview angle. The right visual field display is configured to display the image obtained after the image processing is performed on the information about the image at the right rearview angle. The HMI display is configured to: when the left visual field display is faulty, display the image obtained after the image processing is performed on the information about the image at the left rearview angle, and/or configured to: when the right visual field display is faulty, display the image obtained after the image processing is performed on the information about the image at the right rearview angle. The left visual field display, the right visual field display, and the HMI display are all connected to the first controller.

In this design manner, an HMI display of another in-vehicle system on the vehicle is further reused, to further improve reliability of the electronic rearview mirror system.

Optionally, the first controller is further configured to perform fault detection to determine that at least one of the following is faulty: one or more of the plurality of cameras, the left visual field display, or the right visual field display.

The first controller may perform fault detection on one or more of the plurality of cameras, the left visual field display, or the right visual field display periodically or in real time, to ensure that when it is determined that the one or more of the plurality of cameras, the left visual field display, or the right visual field display is faulty, a spare part is started to replace a faulty part to perform corresponding work, to improve reliability of the electronic rearview mirror system.

According to a third aspect, this application provides a vehicle. The vehicle includes the electronic rearview mirror system according to any one of the first aspect or the implementations of the first aspect, or the vehicle includes the electronic rearview mirror system according to any one of the second aspect or the implementations of the second aspect.

Optionally, the vehicle is configured to: determine a steering intention of a user based on an operation of the user, and display, based on the electronic rearview mirror system, an image that is at a rearview angle and that corresponds to the steering intention. The steering intention of the user includes turning right or turning left. The operation of the user includes shifting a left/right turn light shift lever, operating on an HMI display, sending a predefined control voice, or making a predefined control gesture.

The displaying an image that is at a rearview angle and that corresponds to the steering intention may be understood as: if the steering intention of the user is turning right, displaying an image at a right rearview angle; or if the steering intention of the user is turning left, displaying an image at a left rearview angle.

It should be understood that technical solutions of the third aspect of this application correspond to the technical solutions of the first aspect and the second aspect of this application, and beneficial effects achieved by the aspects and the corresponding feasible implementations are similar. Details are not described again.

### BRIEF DESCRIPTION OF DRAWINGS

FIG. 1 is a block diagram of an electronic rearview mirror system;
FIG. 2 is a block diagram of an electronic rearview mirror system according to an embodiment of this application;
FIG. 3 is a block diagram of an electronic rearview mirror system including two cameras according to an embodiment of this application;
FIG. 4 and FIG. 5 are another two more detailed block diagrams of an electronic rearview mirror system including two cameras according to an embodiment of this application;
FIG. 6 is a block diagram of an electronic rearview mirror system including four cameras according to an embodiment of this application;
FIG. 7 and FIG. 8 are another two more detailed block diagrams of an electronic rearview mirror system including four cameras according to an embodiment of this application;
FIG. 9 is still another block diagram of an electronic rearview mirror system including four cameras according to an embodiment of this application;
FIG. 10 and FIG. 11 are still another two more detailed block diagrams of an electronic rearview mirror system including four cameras according to an embodiment of this application;
FIG. 12 is another block diagram of an electronic rearview mirror system according to an embodiment of this application;
FIG. 13 is still another block diagram of an electronic rearview mirror system including two cameras according to an embodiment of this application;
FIG. 14 is still another more detailed block diagram of an electronic rearview mirror system including two cameras according to an embodiment of this application;
FIG. 15 is yet another block diagram of an electronic rearview mirror system including four cameras according to an embodiment of this application;
FIG. 16 is still another more detailed block diagram of an electronic rearview mirror system including four cameras according to an embodiment of this application; and
FIG. 17 and FIG. 18 are two diagrams of a vehicle according to an embodiment of this application.

### DESCRIPTION OF EMBODIMENTS

The following describes technical solutions of this application with reference to accompanying drawings.

For ease of clearly describing the technical solutions in embodiments of this application, the following descriptions are first provided.

First, in embodiments of this application, terms such as "first" and "second" are used to distinguish between same items or similar items having basically same functions and effects. For example, a first controller and a second controller are used to distinguish between different controllers, a first left camera and a second left camera are used to distinguish between different left cameras, a first right camera and a second right camera are used to distinguish between different right cameras, a first deserializer and a second deserializer are used to distinguish between different deserializers, a first serializer and a second serializer are used to distinguish between different serializers, a first system on chip and a second system on chip are used to distinguish between different systems on chip, and a sequence thereof is not limited. A person skilled in the art may understand that the terms such as "first" and "second" do not limit a quantity or an execution sequence, and the terms such as "first" and "second" do not indicate a definite difference.

Second, in embodiments of this application, "at least one type (piece)" means one type (piece) or more types (pieces). "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between associated objects, but does not exclude an "and" relationship between the associated objects. A specific meaning represented by the character "/" may be understood with reference to the context.

Third, in embodiments of this application, the terms "include", "have" and any variant thereof are intended to cover a non-exclusive inclusion. For example, an apparatus, system, product, or device that includes a list of modules, modules or units is not necessarily limited to those modules, modules or units that are expressly listed, but may include other modules, modules or units not expressly listed or inherent to such apparatus, system, product, or device.

First, terms used in this application are briefly described.

1. Electronic rearview mirror: The electronic rearview mirror is a combination of a camera and a display. The camera collects a real-time image and transmits the image to a display in a vehicle for displaying. Benefits of using the electronic rearview mirror include: A field of view (field of view, FOV) is widened and an effective distance is extended; impact of light, rain, snow, and the like is avoided; and impact of a high beam headlight of a next vehicle is avoided.

2. Electronic rearview mirror system: The electronic rearview mirror system is also known as a camera monitor system (camera monitor system, CMS). Images at rearview angles on left and right sides outside the vehicle can be provided to a driver through a display inside the vehicle by using cameras on both sides of a vehicle body instead of the conventional lens-reflective rearview mirror.

3. Serializer and deserializer: The serializer and the deserializer are interface circuits in high-speed data communication. For example, a video serial communication III (flat panel display link III) (flat panel display link III, FPD-Link III) serializer/deserializer is an interface used for point-to-point video transmission in the field of vehicle technologies. The FPD-Link III serializer/deserializer optimizes a link between a processor and a display, or between a processor and a camera (camera), to implement high-speed data communication. It should be understood that the serializer and the deserializer are used in pairs.

With continuous development of vehicle technologies, currently, some countries have allowed use of an electronic rearview mirror system instead of a lens-reflective rearview mirror.

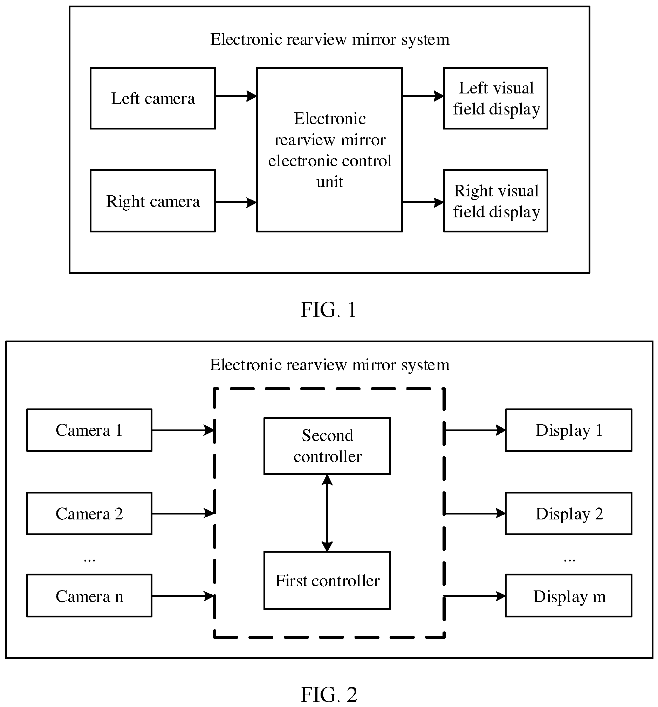

FIG. 1 is a block diagram of an electronic rearview mirror system. A currently known independent electronic rearview mirror system is shown in FIG. 1, and includes a left camera, a right camera, an electronic rearview mirror ECU, a left visual field display, and a right visual field display. However, costs of deploying such an independent electronic rearview mirror system on a vehicle are high.

Based on the foregoing problem, this application provides an electronic rearview mirror system and a vehicle, to implement a function of the electronic rearview mirror by reusing a controller of another in-vehicle system on the vehicle. The electronic rearview mirror ECU does not need to be separately deployed, so that costs of the electronic rearview mirror ECU are reduced, and costs of deploying the electronic rearview mirror system on the vehicle can be reduced.

To better understand the electronic rearview mirror system and the vehicle provided in embodiments of this application, the following describes the technical solutions in this application with reference to the accompanying drawings.

An embodiment of this application provides an electronic rearview mirror system. The electronic rearview mirror system may include a plurality of cameras, a first controller, a second controller, and a plurality of displays. The plurality of cameras are configured to collect an image at a left rearview angle and an image at a right rearview angle outside a vehicle. The first controller and the second controller are configured to: obtain information about the images from the plurality of cameras and perform image processing on the information. The first controller and the second controller are further configured to serve as controllers of an in-vehicle system different from the electronic rearview mirror system. The plurality of displays are configured to display images obtained after the image processing.

FIG. 2 is a block diagram of an electronic rearview mirror system according to an embodiment of this application.

As shown in FIG. 2, the electronic rearview mirror system includes a plurality of cameras: a camera 1, a camera 2, ..., and a camera n, where n is a positive integer, and n>2. The plurality of cameras may be configured to collect an image at a left rearview angle and an image at a right rearview angle outside a vehicle. The electronic rearview mirror system includes a first controller and a second controller. The first controller and the second controller may be configured to obtain information, from the plurality of cameras, about the images that are at the left rearview angle and the right rearview angle outside the vehicle and that are collected by the plurality of cameras, and may perform image processing on the information about the images by using an image processing technology. The electronic rearview mirror system includes a plurality of displays: a display 1, a display 2, ..., and a display m, where m is a positive integer, and m>2. The plurality of displays may be configured to display images obtained after the first controller and/or the second controller perform/performs image processing on information about images collected by the plurality of cameras.

It should be noted that, the first controller and the second controller are not electronic rearview mirrors ECUs that are separately deployed, but are reused controllers of another in-vehicle system different from the electronic rearview mirror system on the vehicle. It should be further noted that the another in-vehicle system on the vehicle may include at least one in-vehicle system. In other words, the first controller and the second controller may be reused controllers of another same in-vehicle system, or may be reused controllers of another two different in-vehicle systems. This is not limited in this embodiment of this application.

Further, optionally, an HMI display may also reuse an HMI display of another in-vehicle system on the vehicle.

In a possible design solution, that the first controller and the second controller are further configured to serve as controllers of an in-vehicle system different from the electronic rearview mirror system includes: The first controller and the second controller are further configured to serve as controllers of an ADAS.

In other words, the first controller and the second controller may be reused controllers of the ADAS. In this implementation, the ADAS may include two controllers, where one controller may serve as a primary controller, and the other controller may serve as a secondary controller. The secondary controller of the ADAS may be reused as the first controller in the electronic rearview mirror system, and the primary controller of the ADAS may be reused as the second controller in the electronic rearview mirror system. This is not limited in this embodiment of this application.

In a possible design solution, that the first controller and the second controller are further configured to serve as controllers of an in-vehicle system different from the electronic rearview mirror system includes: The first controller is further configured to serve as a controller of the ADAS, and the second controller is further configured to as a controller of an IVI system.

In other words, the first controller may be a reused controller of the ADAS, and the second controller may be a reused controller of the IVI system. In this implementation, if the ADAS includes two controllers, one controller may serve as a primary controller, and the other controller may serve as a secondary controller, the first controller may be a reused primary controller of the ADAS, or may be a reused secondary controller of the ADAS. This is not limited in this embodiment of this application.

Optionally, the first controller and the second controller are packaged in different boxes or a same box.

For example, when the first controller is a reused controller of the ADAS, and the second controller is a reused controller of the IVI system, the first controller and the second controller may be packaged in different boxes. When the first controller and the second controller are reused controllers of the ADAS, the first controller and the second controller may be packaged in different boxes, or the first controller and the second controller may be packaged in a same box. This is not limited in this embodiment of this application.

It should be noted that the box may be understood as a housing used to package a board of the controller, or may be understood as a protective housing of the board of the controller. If the first controller and the second controller are packaged in different boxes, the first controller and a box packaging the first controller may form a controller product, and the second controller and a box packaging the second controller may form another controller product. If the first controller and the second controller are packaged in a same box, the first controller, the second controller, and the box packaging the two controllers may form a controller product.

Optionally, the second controller is further configured to perform fault detection to determine that at least one of the following is faulty: one or more of the plurality of cameras, the first controller, the left visual field display, or the right visual field display.

The first controller may serve as a primary controller in the electronic rearview mirror system, and the second controller may serve as a secondary controller in the electronic rearview mirror system. The second controller may perform fault detection on one or more of the plurality of cameras, the first controller, the left visual field display, or the right visual field display periodically or in real time, to ensure that when it is determined that the one or more of the plurality of cameras, the first controller, the left visual field display, or the right visual field display is faulty, a spare part is started to replace a faulty part, to improve reliability of the electronic rearview mirror system.

As an example rather than a limitation, when the second controller is a reused primary controller of the ADAS, or when the second controller is a reused controller of the IVI system, the second controller may be further configured to perform fault detection. The second controller may perform fault detection on the plurality of cameras, the first controller, the left visual field display, or the right visual field display, to determine whether the plurality of cameras, the first controller, the left visual field display, or the right visual field display are/is faulty. This is not limited in this embodiment of this application.

In a possible design solution, the plurality of cameras include at least one left camera and at least one right camera. The at least one left camera is configured to collect the image at the left rearview angle, and the at least one right camera is configured to collect the image at the right rearview angle. The plurality of displays include a left visual field display, a right visual field display, and an HMI display. The left visual field display is configured to display the image obtained after the image processing is performed on the information about the image at the left rearview angle. The right visual field display is configured to display the image obtained after the image processing is performed on the information about the image at the right rearview angle. The HMI display is configured to: when the left visual field display is faulty, display the image obtained after the image processing is performed on the information about the image at the left rearview angle, and/or configured to: when the right visual field display is faulty, display the image obtained after the image processing is performed on the information about the image at the right rearview angle. Both the left visual field display and the right visual field display are connected to the first controller, the HMI display is connected to the second controller, and the first controller is connected to the second controller.

It should be noted that, that the first controller is connected to the second controller may be understood as that the first controller and the second controller may communicate with each other through an in-vehicle communication link. For example, the first controller and the second controller may communicate with each other by using a controller area network (controller area network, CAN) bus or a wireless communication system (for example, a Sparklink short-range communication technology, a Bluetooth communication technology, or a wireless fidelity (wireless fidelity, Wi-Fi) communication technology), or may communicate with each other by using automotive Ethernet. This is not limited in this embodiment of this application.

In other words, the electronic rearview mirror system may include at least one left camera and at least one right camera. The at least one left camera may be configured to collect the image at the left rearview angle outside the vehicle, and the at least one right camera may be configured to collect the image at the right rearview angle outside the vehicle. The electronic rearview mirror system may further include a left visual field display, a right visual field display, and an HMI display. The left visual field display may be configured to display the image obtained after the image processing is performed on the information about the collected image at the left rearview angle outside the vehicle. The right visual field display may be configured to display the image obtained after the image processing is performed on the information about the collected image at the right rearview angle outside the vehicle. The HMI display may be configured to: when the left visual field display is faulty, display the image obtained after the image processing is performed on the information about the image at the left rearview angle, and/or may be configured to: when the right visual field display is faulty, display the image obtained after the image processing is performed on the information about the image at the right rearview angle.

It should be understood that the HMI display is a reused vehicle-mounted display different from the left visual field display and the right visual field display. For example, the HMI display may be an HMI display (that is, the HMI display is generally referred to as an in-vehicle central control display) of the IVI system. Alternatively, the HMI display may be an HMI display different from another in-vehicle system of the IVI system. This is not limited in this embodiment of this application.

In addition, it should be noted that the HMI display is not limited to being configured to: when the left visual field display is faulty, display the image obtained after the image processing is performed on the information about the image at the left rearview angle; and/or when the right visual field display is faulty, display the image obtained after the image processing is performed on the information about the image at the right rearview angle. The HMI display may be further configured to display, based on an operation of a driver or a preset setting, the image obtained after the image processing is performed on the information about the image at the left rearview angle, and/or the image obtained after the image processing is performed on the information about the image at the right rearview angle. This is not limited in this embodiment of this application.

In a possible design solution, both the at least one left camera and the at least one right camera are connected to the first controller and the second controller.

Optionally, the plurality of cameras may include two cameras: one left camera and one right camera. In this possible design solution, the left camera is separately connected to the first controller and the second controller, and the right camera is separately connected to the first controller and the second controller.

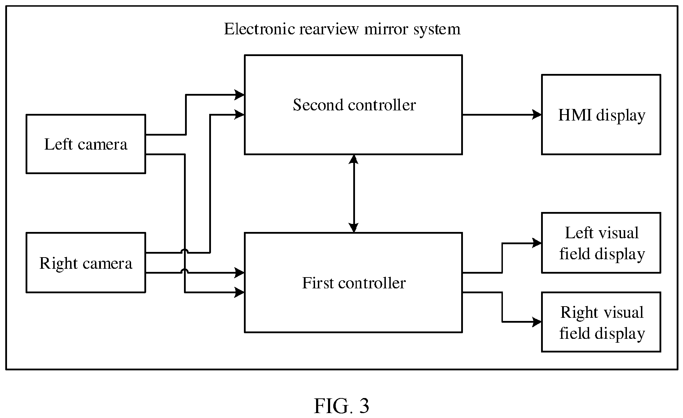

FIG. 3 is a block diagram of an electronic rearview mirror system including two cameras according to an embodiment of this application.

As shown in FIG. 3, the electronic rearview mirror system includes a left camera, a right camera, a first controller, a second controller, a left visual field display, a right visual field display, and an HMI display. The left camera is separately connected to the first controller and the second controller. The right camera is separately connected to the first controller and the second controller. Both the left visual field display and the right visual field display are connected to the first controller, and the HMI display is connected to the second controller.

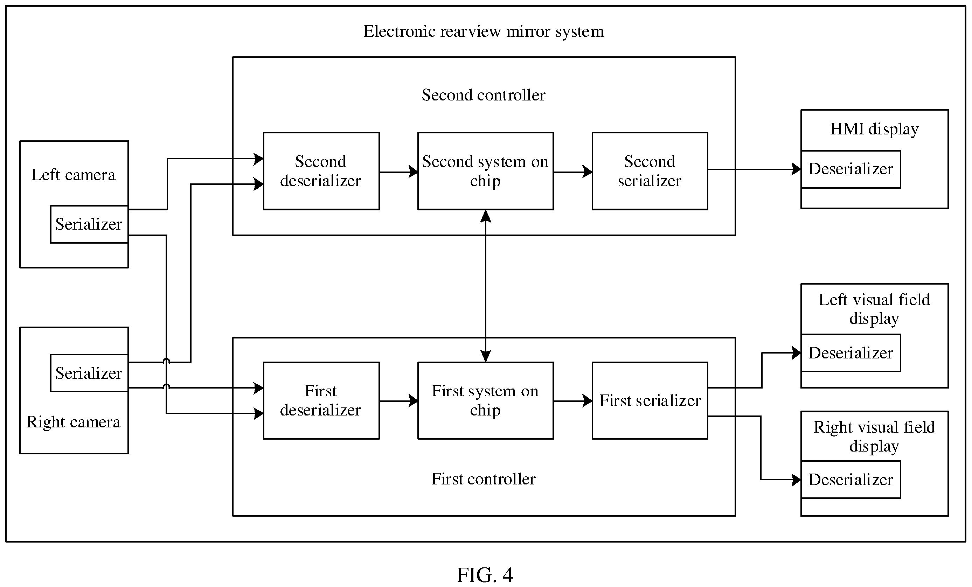

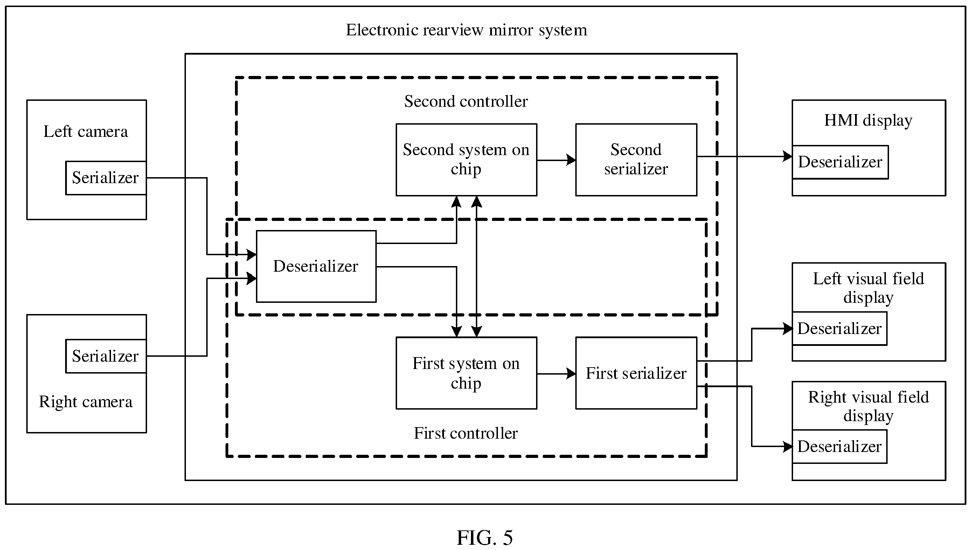

FIG. 4 and FIG. 5 are another two more detailed block diagrams of the electronic rearview mirror system including two cameras according to an embodiment of this application.

FIG. 4 shows a case in which the first controller and the second controller are packaged in two different boxes.

As shown in FIG. 4, a dual-interface serializer may be configured in each of the left camera and the right camera. In this case, a deserializer needs to be configured in each of the first controller and the second controller. For example, a first dual-interface deserializer is configured in the first controller, and a second dual-interface deserializer is configured in the second controller. The left camera may transmit, by using the serializer, information about a collected image to a first system on chip (system on chip, SOC) in the first controller by using the first deserializer, or transmit, by using the second deserializer, information about the collected image to a second system on chip in the second controller. Similarly, the right camera may transmit the information about the collected image to the first system on chip in the first controller by using the first deserializer via the serializer, or transmit the information about the collected image to the second system on chip in the second controller by using the second deserializer, and then the first system on chip or the second system on chip performs image processing on the information about the image.

After the image processing is completed, processed information may be transmitted to the display. For example, when a deserializer is configured in each of the left visual field display and the right visual field display, the first controller may transmit, to the left visual field display by using the first dual-interface serializer, information, obtained after image processing, about an image at a left rearview angle, and transmit information, obtained after image processing, about an image at a right rearview angle to the right visual field display.

When the left visual field display is faulty (including a case in which the deserializer configured in the left visual field display is faulty), but the first controller is not faulty (neither the first deserializer in the first controller, the first system on chip, or the first serializer is faulty), there may be the following several implementations. This is not limited in this embodiment of this application.

Implementation 1: After the first system on chip in the first controller performs image processing on information about an image collected by the left camera, the first system on chip transmits processed information to the second system on chip in the second controller, and the second system on chip may transmit the processed information to the HMI display by using the second serializer or the automotive Ethernet.

Implementation 2: After the second system on chip in the second controller directly performs image processing on information about an image collected by the left camera, the second system on chip transmits processed information to the HMI display by using the second serializer.

When the right visual field display is faulty (including a case in which the deserializer configured in the right visual field display is faulty), but the first controller is not faulty (neither the first deserializer in the first controller, the first system on chip, or the first serializer is faulty), there may be the following several implementations. This is not limited in this embodiment of this application.

Implementation 1: After the first system on chip in the first controller performs image processing on information about an image collected by the right camera, the first system on chip transmits processed information to the second system on chip in the second controller, and the second system on chip may transmit the processed information to the HMI display by using the second serializer.

Implementation 2: After the second system on chip in the second controller directly performs image processing on information about an image collected by the right camera, the second system on chip transmits processed information to the HMI display by using the second serializer.

When the first controller is faulty, that is, when any component of the first controller is faulty, for example, when the first deserializer, the first system on chip, or the first serializer is faulty, after the second system on chip in the second controller directly performs image processing on the information about the image collected by the left camera, the second system on chip transmits processed information to the HMI display by using the second serializer. In addition/Alternatively, after the second system on chip in the second controller directly performs image processing on the information about the image collected by the right camera, the second system on chip transmits processed information to the HMI display by using the second serializer. In other words, based on an operation of the driver or a preset setting, only the image at the left rearview angle may be displayed on the HMI display, or only the image at the right rearview angle may be displayed on the HMI display, or both the image at the left rearview angle and the image at the right rearview angle may be displayed on the HMI display. This is not limited in this embodiment of this application.

It should be understood that, that the second system on chip transmits information obtained after the image processing to the HMI display by using the second serializer is merely an example.

As an example rather than a limitation, in an actual application scenario, when the first controller is a reused user of the ADAS, and the second controller is a reused controller of the IVI system, the second system on chip may directly transmit information obtained after the image processing to the HMI display of the IVI system by using the second serializer. When both the first controller and the second controller are reused controllers of the ADAS, the second system on chip may transmit information obtained after image processing to the IVI system by using the second serializer, and then display the information on the HMI display of the IVI system. Alternatively, the second system on chip may forward information obtained after image processing to the IVI system by using the automotive Ethernet, and then display the information on the HMI display of the IVI system. This is not limited in this embodiment of this application.

FIG. 5 shows a case in which the first controller and the second controller are packaged in a same box.

As shown in FIG. 5, a dual-interface serializer may be configured in each of the left camera and the right camera. In this case, a deserializer needs to be configured in each of the first controller and the second controller. Because the first controller and the second controller are packaged in a same box, as shown in the figure, the first controller and the second controller may share a dual-interface deserializer. The left camera may transmit, by using the serializer, information about a collected image to a first system on chip in the first controller by using the deserializer, or transmit, by using the deserializer, information about the collected image to a second system on chip in the second controller. Similarly, the right camera may transmit the information about the collected image to the first system on chip in the first controller by using the deserializer via the serializer, or transmit the information about the collected image to the second system on chip in the second controller by using the deserializer, and then the first system on chip or the second system on chip performs image processing on the information about the image.

After the image processing is completed, processed information may be transmitted to the display. For example, when a deserializer is configured in each of the left visual field display and the right visual field display, the first controller may transmit, to the left visual field display by using the first dual-interface serializer, information, obtained after image processing, about an image at a left rearview angle, and transmit information, obtained after image processing, about an image at a right rearview angle to the right visual field display.

As described above, in this implementation, the first controller and the second controller are reused controllers of the ADAS. When the first controller is faulty (the first system on chip in the first controller and/or the first serializer in the first controller are/is faulty), the second system on chip may transmit information obtained after image processing to the IVI system by using the second serializer, and then display the information on the HMI display of the IVI system. Alternatively, the second system on chip may forward information obtained after image processing to the IVI system by using automotive Ethernet, and then display the information on the HMI display of the IVI system.

In a possible design solution, the at least one left camera includes a first left camera and a second left camera, and the at least one right camera includes a first right camera and a second right camera. The first left camera is configured to collect the image at the left rearview angle. The second left camera is configured to collect the image at the left rearview angle when the first left camera or the left visual field display is faulty. The first right camera is configured to collect the image at the right rearview angle. The second right camera is configured to collect the image at the right rearview angle when the first right camera or the right visual field display is faulty. Both the first left camera and the first right camera are connected to the first controller, and both the second left camera and the second right camera are connected to the second controller.

That is, the plurality of cameras may include four cameras: the first left camera, the second left camera, the first right camera, and the second right camera. Both the first left camera and the first right camera are connected to the first controller, and both the second left camera and the second right camera are connected to the second controller.

It should be noted that the second left camera is configured to collect the image at the left rearview angle when the first left camera or the left visual field display is faulty. In other words, the second left camera may be configured to collect the image at the left rearview angle when the first left camera is faulty, or the second left camera may be configured to collect the image at the left rearview angle when the left visual field display is faulty. When the first left camera is not faulty but the left visual field display is faulty, in an implementation, the first left camera collects the image at the left rearview angle. In another implementation, the second left camera collects the image at the left rearview angle. For a detailed description, refer to the following related description.

In addition, related descriptions of the second right camera are the same as related descriptions of the second left camera. For detailed descriptions of the second right camera, refer to the detailed descriptions of the second left camera.

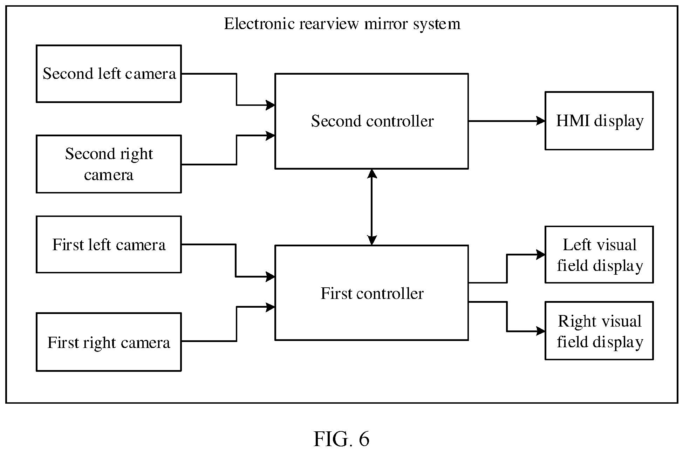

FIG. 6 is a block diagram of an electronic rearview mirror system including four cameras according to an embodiment of this application.

As shown in FIG. 6, the electronic rearview mirror system includes a first left camera, a second left camera, a first right camera, a second right camera, a first controller, a second controller, a left visual field display, a right visual field display, and an HMI display. Both the first left camera and the first right camera are connected to the first controller, both the second left camera and the second right camera are connected to the second controller, both the left visual field display and the right visual field display are connected to the first controller, and the HMI display is connected to the second controller.

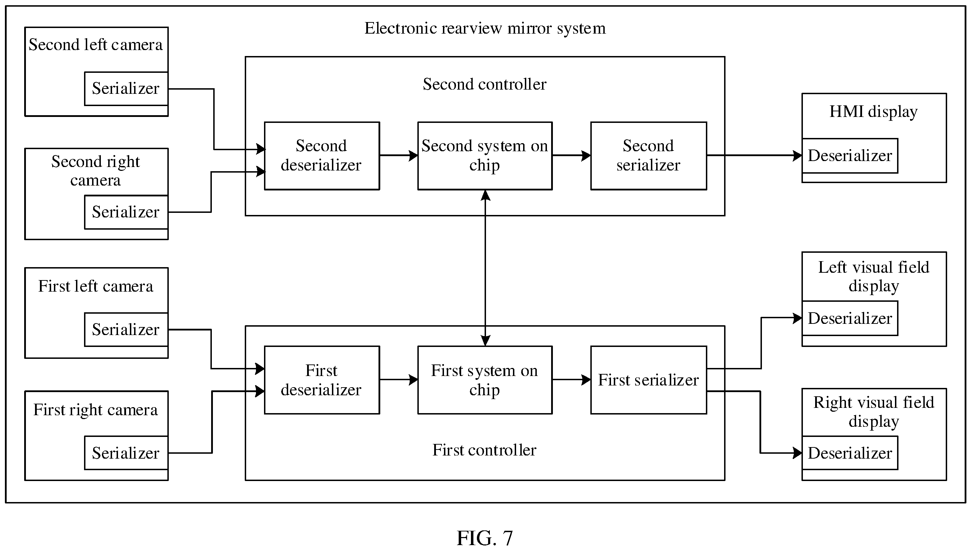

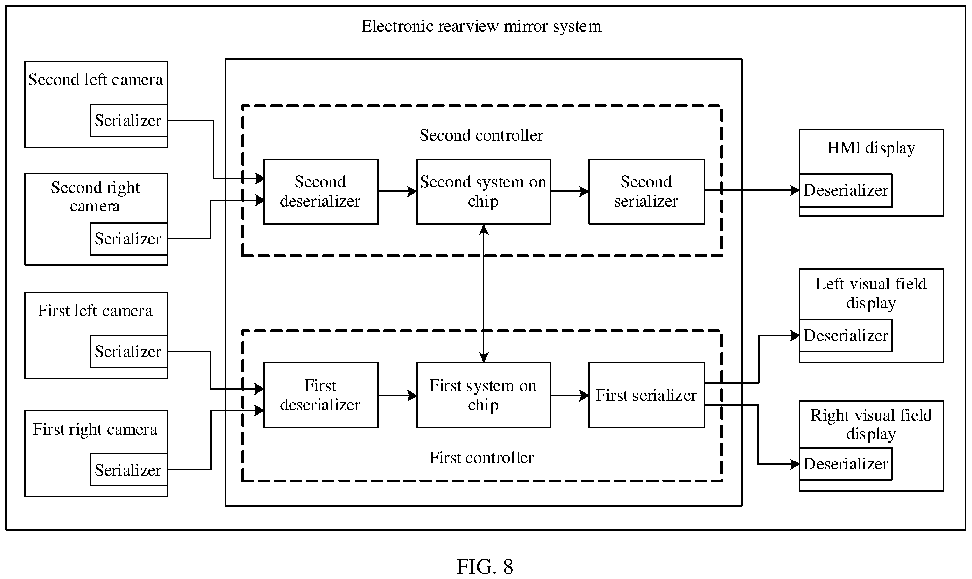

FIG. 7 and FIG. 8 are another two more detailed block diagrams of the electronic rearview mirror system including four cameras according to an embodiment of this application.

FIG. 7 shows a case in which the first controller and the second controller are packaged in two different boxes.

As shown in FIG. 7, a single-interface serializer may be configured in each of the first left camera, the second left camera, the first right camera, and the second right camera. In this case, a dual-interface deserializer needs to be configured in each of the first controller and the second controller. For example, a first dual-interface deserializer is configured in the first controller, and a second dual-interface deserializer is configured in the second controller. The first left camera may transmit information about a collected image to the first system on chip in the first controller by using a first deserializer via the serializer disposed in the first left camera, and the second left camera may transmit the information about the collected image to the second system on chip in the second controller by using a second deserializer via the serializer disposed in the second left camera. Similarly, the first right camera may transmit the information about the collected image to the first system on chip in the first controller by using the first deserializer via the serializer disposed in the first right camera, and the second right camera may transmit the information about the collected image to the second system on chip in the second controller by using the second deserializer via the serializer disposed in the second right camera. Then, the first system on chip or the second system on chip performs image processing on the information about the image.

After the image processing is completed, processed information may be transmitted to the display. For example, when a deserializer is configured in each of the left visual field display and the right visual field display, the first controller may transmit, to the left visual field display by using the first dual-interface serializer, information, obtained after image processing, about an image at a left rearview angle, and transmit information, obtained after image processing, about an image at a right rearview angle to the right visual field display.

When the left visual field display is faulty (including a case in which the deserializer configured in the left visual field display is faulty), but the first controller is not faulty (neither the first deserializer in the first controller, the first system on chip, or the first serializer is faulty) and the first left camera is not faulty (including a case in which the serializer in the first left camera is not faulty), there may be the following several implementations. This is not limited in this embodiment of this application.

Implementation 1: The first left camera collects an image at a left rearview angle outside a vehicle. After the first system on chip in the first controller performs image processing on information about the image collected by the first left camera, the first system on chip transmits processed information to the second system on chip in the second controller, and the second system on chip may transmit the processed information to the HMI display by using the second serializer.

Implementation 2: The first left camera collects an image at a left rearview angle outside a vehicle, the first system on chip in the first controller forwards information about the image at the left rearview angle to the second system on chip in the second controller by using an in-vehicle communication link, and after the second system on chip performs image processing on the information about the image collected by the first left camera, the second system on chip may transmit processed information to the HMI display by using the second serializer.

It may be understood that the foregoing implementation 1 and implementation 2 are two implementations in which the first left camera collects the image at the left rearview angle in a case in which the first left camera is not faulty but the left visual field display is faulty. In other words, provided that the first left camera is not faulty, the first left camera may still be used to collect the image at the left rearview angle.

Implementation 3: The second left camera collects an image at a left rearview angle outside a vehicle. After the second system on chip in the second controller performs image processing on information about the image collected by the second left camera, the second system on chip transmits processed information to the HMI display by using the second serializer.

It may be understood that the foregoing implementation 3 is an implementation in which the second left camera collects the image at the left rearview angle in a case in which the first left camera is not faulty but the left visual field display is faulty. In other words, provided that the first left camera is not faulty, the second left camera may still be used to collect the image at the left rearview angle.

When the right visual field display is faulty (including a case in which the deserializer configured in the right visual field display is faulty), but the first controller is not faulty (neither the first deserializer in the first controller, the first system on chip, or the first serializer is faulty) and the first right camera is not faulty (including a case in which the serializer in the first right camera is not faulty), there may be the following several implementations. This is not limited in this embodiment of this application.

Implementation 1: The first right camera collects an image at a right rearview angle outside a vehicle. After the first system on chip in the first controller performs image processing on information about the image collected by the first right camera, the first system on chip transmits processed information to the second system on chip in the second controller, and the second system on chip may transmit the processed information to the HMI display by using the second serializer.

Implementation 2: The first right camera collects an image at a right rearview angle outside a vehicle, the first system on chip in the first controller forwards information about the image at the right rearview angle to the second system on chip in the second controller by using an in-vehicle communication link, and after the second system on chip performs image processing on the information about the image collected by the first right camera, the second system on chip may transmit processed information to the HMI display by using the second serializer.

It may be understood that the foregoing implementation 1 and implementation 2 are two implementations in which the first right camera collects the image at the right rearview angle in a case in which the first right camera is not faulty but the right visual field display is faulty. In other words, provided that the first right camera is not faulty, the first right camera may still be used to collect the image at the right rearview angle.

Implementation 3: The second right camera collects an image at a right rearview angle outside a vehicle. After the second system on chip in the second controller performs image processing on information about the image collected by the second right camera, the second system on chip transmits processed information to the HMI display by using the second serializer.

It may be understood that the foregoing implementation 3 is an implementation in which the second right camera collects the image at the right rearview angle in a case in which the first right camera is not faulty but the right visual field display is faulty. In other words, provided that the first right camera is not faulty, the second right camera may still be used to collect the image at the right rearview angle.

When the first left camera is faulty (including a case in which the serializer in the first left camera is faulty), the left visual field display is not faulty (including a case in which the deserializer configured in the left visual field display is not faulty), and the first controller is not faulty (neither the first deserializer in the first controller, the first system on chip, or the first serializer is faulty), there may be the following several implementations. This is not limited in this embodiment of this application.

Implementation 1: The second left camera collects an image at a left rearview angle outside a vehicle, and the second system on chip in the second controller forwards information about the image at the left rearview angle to the first system on chip in the first controller by using an in-vehicle communication link. After the first system on chip performs image processing on the information about the image collected by the second left camera, the first system on chip may transmit processed information to the left visual field display by using the first serializer.

Implementation 2: The second left camera collects an image at a left rearview angle outside a vehicle, and after performing image processing on information about the image collected by the second left camera, the second system on chip in the second controller forwards processed information to the first system on chip in the first controller by using an in-vehicle communication link. The first system on chip may transmit the processed information to the left visual field display by using the first serializer.

Implementation 3: The second left camera collects an image at a left rearview angle outside a vehicle. After the second system on chip in the second controller performs image processing on information about the image collected by the second left camera, the second system on chip transmits processed information to the HMI display by using the second serializer.

When the first right camera is faulty (including a case in which the serializer in the first right camera is faulty), the right visual field display is not faulty (including a case in which the deserializer configured in the right visual field display is not faulty), and the first controller is not faulty (neither the first deserializer in the first controller, the first system on chip, or the first serializer is faulty), there may be the following several implementations. This is not limited in this embodiment of this application.

Implementation 1: The second right camera collects an image at a right rearview angle outside a vehicle, and the second system on chip in the second controller forwards information about the image at the right rearview angle to the first system on chip in the first controller by using an in-vehicle communication link. After the first system on chip performs image processing on the information about the image collected by the second right camera, the first system on chip may transmit processed information to the right visual field display by using the first serializer.

Implementation 2: The second right camera collects an image at a right rearview angle outside a vehicle, and after performing image processing on information about the image collected by the second right camera, the second system on chip in the second controller forwards processed information to the first system on chip in the first controller by using an in-vehicle communication link. The first system on chip may transmit the processed information to the right visual field display by using the first serializer.

Implementation 3: The second right camera collects an image at a right rearview angle outside a vehicle. After the second system on chip in the second controller performs image processing on information about the image collected by the second right camera, the second system on chip transmits processed information to the HMI display by using the second serializer.

When the first controller is faulty, that is, when any component of the first controller is faulty, for example, when the first deserializer, the first system on chip, or the first serializer is faulty, the second left camera and the second right camera collect images. After the second system on chip in the second controller performs image processing on the information about the images collected by the second left camera and the second right camera, the second system on chip transmits processed information to the HMI display by using the second serializer. In other words, based on an operation of the driver or a preset setting, only the image at the left rearview angle may be displayed on the HMI display, or only the image at the right rearview angle may be displayed on the HMI display, or both the image at the left rearview angle and the image at the right rearview angle may be displayed on the HMI display. This is not limited in this embodiment of this application.

In addition, it should be noted that, as an example rather than a limitation, in an actual application scenario, when the first controller is a reused controller of the ADAS, and the second controller is a reused controller of the IVI system, the second system on chip may directly transmit information obtained after image processing to the HMI display of the IVI system by using the second serializer. When both the first controller and the second controller are reused controllers of the ADAS, the second system on chip may transmit information obtained after image processing to the IVI system by using the second serializer, and then display the information on the HMI display of the IVI system. Alternatively, the second system on chip may forward information obtained after image processing to the IVI system by using automotive Ethernet, and then display the information on the HMI display of the IVI system. This is not limited in this embodiment of this application.

FIG. 8 shows a case in which the first controller and the second controller are packaged in a same box.

It should be understood that a difference between FIG. 8 and FIG. 7 lies in that whether the first controller and the second controller are packaged in a same box. In the design solution in FIG. 8, the first controller and the second controller may be reused controllers of the ADAS. When the first controller is faulty (the first system on chip in the first controller and/or the first serializer in the first controller are/is faulty), the second system on chip may transmit information obtained after image processing to the IVI system by using the second serializer, and then display the information on the HMI display of the IVI system. Alternatively, the second system on chip may forward information obtained after image processing to the IVI system by using automotive Ethernet, and then display the information on the HMI display of the IVI system. For other descriptions of FIG. 8, refer to the foregoing related descriptions of FIG. 7. For brevity, details are not described herein again.

Optionally, the plurality of cameras may include four cameras: the first left camera, the second left camera, the first right camera, and the second right camera. The four cameras are all connected to the first controller and the second controller.

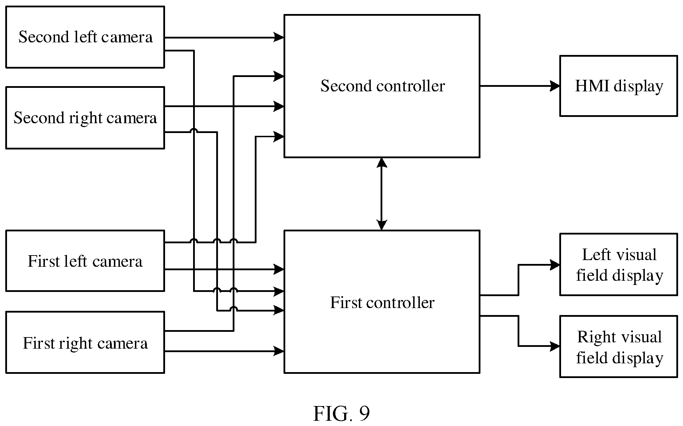

FIG. 9 is still another block diagram of an electronic rearview mirror system including four cameras according to an embodiment of this application.

As shown in FIG. 9, the electronic rearview mirror system includes a first left camera, a second left camera, a first right camera, a second right camera, a first controller, a second controller, a left visual field display, a right visual field display, and an HMI display. The first left camera, the second left camera, the first right camera, and the second right camera are all connected to the first controller and the second controller. Both the left visual field display and the right visual field display are connected to the first controller, and the HMI display is connected to the second controller. In this implementation, when the first left camera is faulty, the second left camera may replace the first left camera to collect an image at a left rearview angle outside a vehicle. When the first right camera is faulty, the second right camera may replace the first right camera to collect an image at a right rearview angle outside the vehicle. In this way, reliability of the electronic rearview mirror system can be improved.

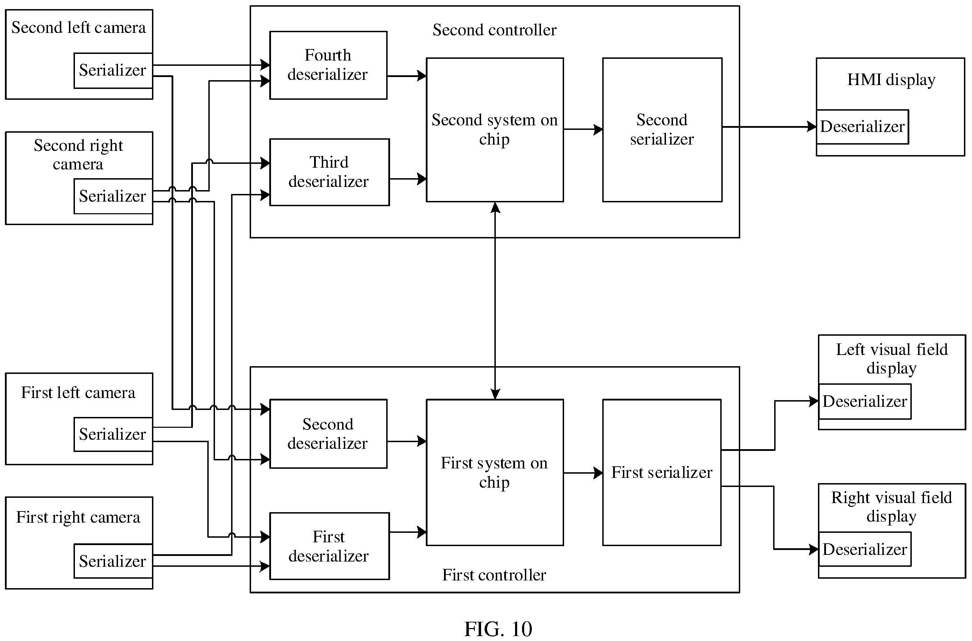

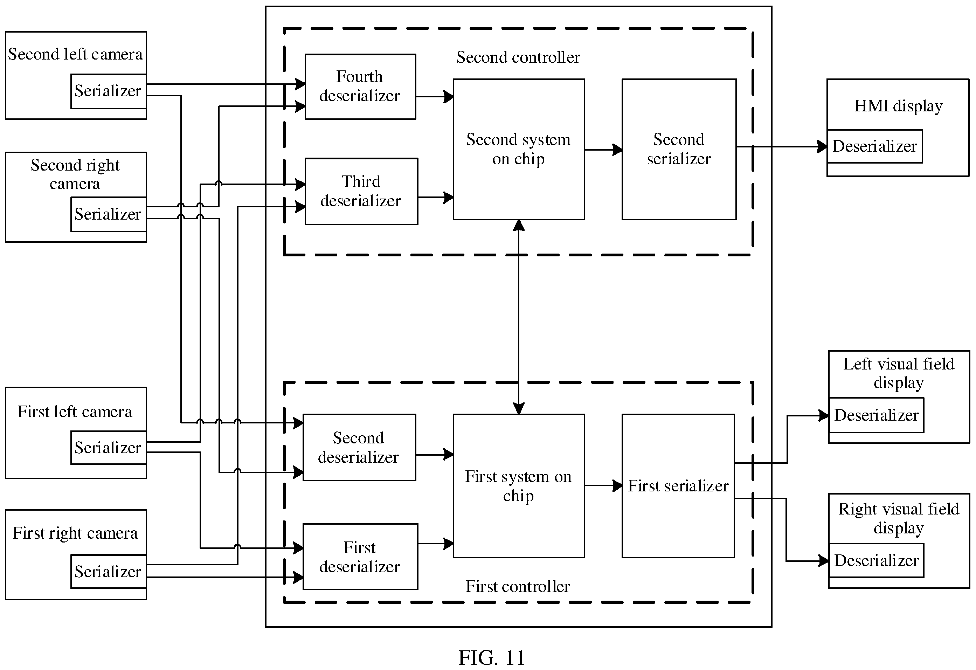

FIG. 10 and FIG. 11 are still another two more detailed block diagrams of the electronic rearview mirror system including four cameras according to an embodiment of this application.

FIG. 10 shows a case in which the first controller and the second controller are packaged in two different boxes.

As shown in FIG. 10, a dual-interface serializer may be configured in each of the first left camera, the second left camera, the first right camera, and the second right camera. In this case, a dual-interface deserializer needs to be configured in each of the first controller and the second controller. For example, a first dual-interface deserializer and a second dual-interface deserializer are configured in the first controller, and a third dual-interface deserializer and a fourth dual-interface deserializer are configured in the second controller. The first left camera may transmit information about a collected image to the first system on chip in the first controller by using a first deserializer via the serializer disposed in the first left camera, and the first right camera may transmit the information about the collected image to the first system on chip in the first controller by using the first deserializer via the serializer disposed in the first right camera. The second left camera may transmit the information about the collected image to the first system on chip in the first controller by using a second deserializer via the serializer disposed in the second left camera, and the second right camera may transmit the information about the collected image to the first system on chip in the first controller by using the second deserializer via the serializer disposed in the second right camera. The first left camera may transmit information about the collected image to the second system on chip in the second controller by using a third deserializer via the serializer disposed in the first left camera, and the first right camera may transmit the information about the collected image to the second system on chip in the second controller by using the third deserializer via the serializer disposed in the first right camera. The second left camera may transmit the information about the collected image to the second system on chip in the second controller by using a fourth deserializer via the serializer disposed in the second left camera, and the second right camera may transmit the information about the collected image to the second system on chip in the second controller by using the fourth deserializer via the serializer disposed in the second right camera. Then, the first system on chip or the second system on chip performs image processing on the information about the image.

After the image processing is completed, processed information may be transmitted to the display. For example, when a deserializer is configured in each of the left visual field display and the right visual field display, the first controller may transmit, to the left visual field display by using the first dual-interface serializer, information, obtained after image processing, about an image at a left rearview angle, and transmit information, obtained after image processing, about an image at a right rearview angle to the right visual field display.

When the left visual field display is faulty (including a case in which the deserializer configured in the left visual field display is faulty), but neither the first deserializer in the first controller, the first system on chip, the first serializer or the first left camera is not faulty (including a case in which the serializer in the first left camera is not faulty), there may be the following several implementations. This is not limited in this embodiment of this application.

Implementation 1: The first left camera collects an image at a left rearview angle outside a vehicle. After the first system on chip in the first controller performs image processing on information about the image collected by the first left camera, the first system on chip transmits processed information to the second system on chip in the second controller, and the second system on chip may transmit the processed information to the HMI display by using the second serializer.

Implementation 2: The first left camera collects an image at a left rearview angle outside a vehicle, the first system on chip in the first controller forwards information about the image at the left rearview angle to the second system on chip in the second controller by using an in-vehicle communication link, and after the second system on chip performs image processing on the information about the image collected by the first left camera, the second system on chip may transmit processed information to the HMI display by using the second serializer.

It may be understood that the foregoing implementation 1 and implementation 2 are two implementations in which the first left camera collects the image at the left rearview angle in a case in which the first left camera is not faulty but the left visual field display is faulty. In other words, provided that the first left camera is not faulty, the first left camera may still be used to collect the image at the left rearview angle.

Implementation 3: The second left camera collects an image at a left rearview angle outside a vehicle. After the second system on chip in the second controller performs image processing on information about the image collected by the second left camera, the second system on chip transmits processed information to the HMI display by using the second serializer.

It may be understood that the foregoing implementation 3 is an implementation in which the second left camera collects the image at the left rearview angle in a case in which the first left camera is not faulty but the left visual field display is faulty. In other words, provided that the first left camera is not faulty, the second left camera may still be used to collect the image at the left rearview angle.

When the right visual field display is faulty (including a case in which the deserializer configured in the right visual field display is faulty), but neither the first deserializer in the first controller, the first system on chip, the first serializer or the first right camera is faulty (including a case in which the serializer in the first right camera is not faulty), there may be the following several implementations. This is not limited in this embodiment of this application.

Implementation 1: The first right camera collects an image at a right rearview angle outside a vehicle. After the first system on chip in the first controller performs image processing on information about the image collected by the first right camera, the first system on chip transmits processed information to the second system on chip in the second controller, and the second system on chip may transmit the processed information to the HMI display by using the second serializer.

Implementation 2: The first right camera collects an image at a right rearview angle outside a vehicle, the first system on chip in the first controller forwards information about the image at the right rearview angle to the second system on chip in the second controller by using an in-vehicle communication link, and after the second system on chip performs image processing on the information about the image collected by the first right camera, the second system on chip may transmit processed information to the HMI display by using the second serializer.

It may be understood that the foregoing implementation 1 and implementation 2 are two implementations in which the first right camera collects the image at the right rearview angle in a case in which the first right camera is not faulty but the right visual field display is faulty. In other words, provided that the first right camera is not faulty, the first right camera may still be used to collect the image at the right rearview angle.

Implementation 3: The second right camera collects an image at a right rearview angle outside a vehicle. After the second system on chip in the second controller performs image processing on information about the image collected by the second right camera, the second system on chip transmits processed information to the HMI display by using the second serializer.

It may be understood that the foregoing implementation 3 is an implementation in which the second right camera collects the image at the right rearview angle in a case in which the first right camera is not faulty but the right visual field display is faulty. In other words, provided that the first right camera is not faulty, the second right camera may still be used to collect the image at the right rearview angle.

When the first left camera is faulty (including a case in which the serializer in the first left camera is faulty), the left visual field display is not faulty (including a case in which the deserializer configured in the left visual field display is not faulty), and the first controller is not faulty (neither the first deserializer in the first controller, the second deserializer, the first system on chip, or the first serializer is faulty), there may be the following several implementations. This is not limited in this embodiment of this application.

Implementation 1: The second left camera collects an image at a left rearview angle outside a vehicle, and the second left camera transmits information about the image at the left rearview angle to the first system on chip in the first controller by using the second deserializer via the serializer disposed in the second left camera. After the first system on chip performs image processing on the information about the image collected by the second left camera, the first system on chip may transmit processed information to the left visual field display by using the first serializer.

Implementation 2: The second left camera collects an image at a left rearview angle outside a vehicle, and the second left camera transmits information about the image at the left rearview angle to the second system on chip in the second controller by using the fourth deserializer via the serializer disposed in the second left camera. After performing image processing on the information about the image collected by the second left camera, the second system on chip in the second controller forwards processed information to the first system on chip in the first controller by using an in-vehicle communication link. The first system on chip may transmit processed information to the left visual field display by using the first serializer.

Implementation 3: The second left camera collects an image at a left rearview angle outside a vehicle, and the second left camera transmits information about the image at the left rearview angle to the second system on chip in the second controller by using the fourth deserializer via the serializer disposed in the second left camera. The second system on chip in the second controller forwards the information to the first system on chip in the first controller by using an in-vehicle communication link. After the first system on chip in the first controller performs image processing on the information about the image collected by the second left camera, the first system on chip may transmit processed information to the left visual field display by using the first serializer.

Implementation 4: The second left camera collects an image at a left rearview angle outside a vehicle, and the second left camera transmits information about the image at the left rearview angle to the second system on chip in the second controller by using the fourth deserializer via the serializer disposed in the second left camera. After the second system on chip in the second controller performs image processing on the information about the image collected by the second left camera, the second system on chip may transmit processed information to the HMI display by using the second serializer.

When the first right camera is faulty (including a case in which the serializer in the first right camera is faulty), the right visual field display is not faulty (including a case in which the deserializer configured in the right visual field display is not faulty), and the first controller is not faulty (neither the first deserializer in the first controller, the second deserializer, the first system on chip, or the first serializer is faulty), there may be the following several implementations. This is not limited in this embodiment of this application.

Implementation 1: The second right camera collects an image at a right rearview angle outside a vehicle, and the second right camera transmits information about the image at the right rearview angle to the first system on chip in the first controller by using the second deserializer via the serializer disposed in the second right camera. After the first system on chip performs image processing on the information about the image collected by the second right camera, the first system on chip may transmit processed information to the right visual field display by using the first serializer.

Implementation 2: The second right camera collects an image at a right rearview angle outside a vehicle, and the second right camera transmits information about the image at the right rearview angle to the second system on chip in the second controller by using the fourth deserializer via the serializer disposed in the second right camera. After performing image processing on the information about the image collected by the second right camera, the second system on chip in the second controller forwards processed information to the first system on chip in the first controller by using an in-vehicle communication link. The first system on chip may transmit processed information to the right visual field display by using the first serializer.

Implementation 3: The second right camera collects an image at a right rearview angle outside a vehicle, and the second right camera transmits information about the image at the right rearview angle to the second system on chip in the second controller by using the fourth deserializer via the serializer disposed in the second right camera. The second system on chip in the second controller forwards the information to the first system on chip in the first controller by using an in-vehicle communication link. After the first system on chip in the first controller performs image processing on the information about the image collected by the second right camera, the first system on chip may transmit processed information to the right visual field display by using the first serializer.

Implementation 4: The second right camera collects an image at a right rearview angle outside a vehicle, and the second right camera transmits information about the image at the right rearview angle to the second system on chip in the second controller by using the fourth deserializer via the serializer disposed in the second right camera. After the second system on chip in the second controller performs image processing on the information about the image collected by the second right camera, the second system on chip may transmit processed information to the HMI display by using the second serializer.

When the first system on chip or the first serializer of the first controller is faulty, the second left camera and the second right camera collect images. After the second system on chip in the second controller performs image processing on the information about the images collected by the second left camera and the second right camera, the second system on chip transmits processed information to the HMI display by using the second serializer or automotive Ethernet, and the second system on chip transmits the processed information to the HMI display by using the second serializer. In other words, based on an operation of the driver or a preset setting, only the image at the left rearview angle may be displayed on the HMI display, or only the image at the right rearview angle may be displayed on the HMI display, or both the image at the left rearview angle and the image at the right rearview angle may be displayed on the HMI display. This is not limited in this embodiment of this application.

In addition, it should be noted that, as an example rather than a limitation, in an actual application scenario, when the first controller is a reused controller of the ADAS, and the second controller is a reused controller of the IVI system, the second system on chip may directly transmit information obtained after image processing to the HMI display of the IVI system by using the second serializer. When both the first controller and the second controller are reused controllers of the ADAS, the second system on chip may transmit information obtained after image processing to the IVI system by using the second serializer, and then display the information on the HMI display of the IVI system. Alternatively, the second system on chip may forward information obtained after image processing to the IVI system by using automotive Ethernet, and then display the information on the HMI display of the IVI system. This is not limited in this embodiment of this application.

FIG. 11 shows a case in which the first controller and the second controller are packaged in a same box.

It should be understood that a difference between FIG. 11 and FIG. 10 lies in that whether the first controller and the second controller are packaged in a same box. In the design solution in FIG. 11, the first controller and the second controller may be reused controllers of the ADAS. When the first controller is faulty (the first system on chip in the first controller and/or the first serializer in the first controller are/is faulty), the second system on chip may transmit information obtained after image processing to the IVI system by using the second serializer, and then display the information on the HMI display of the IVI system. Alternatively, the second system on chip may forward information obtained after image processing to the IVI system by using automotive Ethernet, and then display the information on the HMI display of the IVI system. For other descriptions of FIG. 11, refer to the foregoing related descriptions of FIG. 10. For brevity, details are not described herein again.

It should be noted that, in the foregoing electronic rearview mirror system, when the left/right visual field display cannot display the image at the left/right rearview angle outside the vehicle due to a failure of at least one component, the driver may control a shift lever by using a left/right turn light (or performing an operation on an HMI interface like a central control screen or an instrument screen), to notify the first controller or the second controller of a turning intention. After performing image processing on the information about the image at the left/right rearview angle outside the vehicle, the first controller or the second controller may display processed information on an HMI display like a central control screen or an instrument screen. This is not limited in this embodiment of this application.

Based on the foregoing solution, a controller of another in-vehicle system on the vehicle is reused to implement a function of an electronic rearview mirror, so that an electronic rearview mirror ECU does not need to be separately deployed. This reduces costs of the electronic rearview mirror ECU, and reduces costs of deploying the electronic rearview mirror system on the vehicle. In addition, two controllers of another in-vehicle system on the vehicle are reused, so that when one controller is faulty, the other controller can still implement image processing on information about an image collected by a camera, to improve reliability of the electronic rearview mirror system. In addition, an HMI display of another in-vehicle system on the vehicle is reused, to further improve reliability of the electronic rearview mirror system.

An embodiment of this application provides another electronic rearview mirror system. The electronic rearview system may include a plurality of cameras, a first controller, and a plurality of displays. The plurality of cameras are configured to collect an image at a left rearview angle and an image at a right rearview angle outside a vehicle. The first controller is configured to: obtain information about the images from the plurality of cameras and perform image processing on the information. The first controller is further configured to serve as a controller of an in-vehicle system different from the electronic rearview mirror system. The plurality of displays are configured to display images obtained after the image processing.

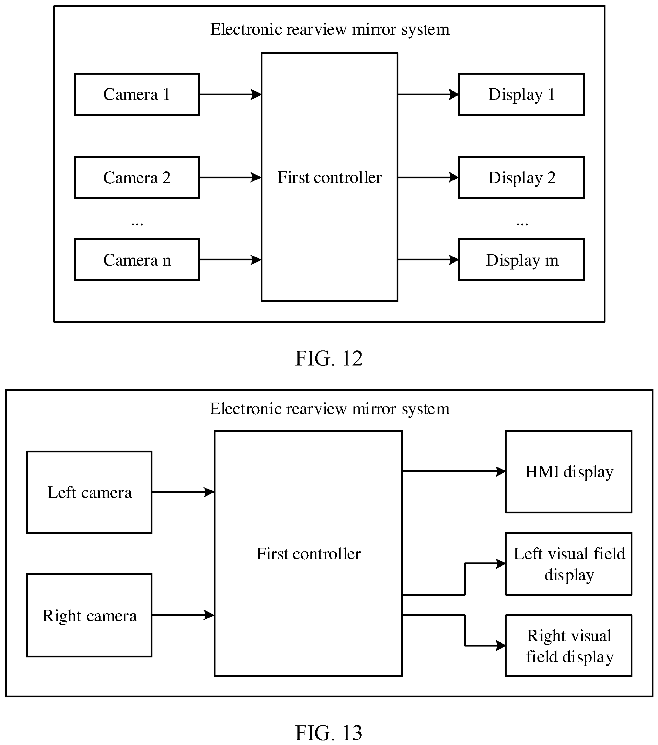

FIG. 12 is another block diagram of an electronic rearview mirror system according to an embodiment of this application.

As shown in FIG. 12, the electronic rearview mirror system includes a plurality of cameras: a camera 1, a camera 2, ..., and a camera n, where n is a positive integer, and n>2. The plurality of cameras may be configured to collect an image at a left rearview angle and an image at a right rearview angle outside a vehicle. The electronic rearview mirror system includes a first controller. The first controller may be configured to obtain information, from the plurality of cameras, about the images that are at the left rearview angle and the right rearview angle outside the vehicle and that are collected by the plurality of cameras, and may perform image processing on the information about the images by using an image processing technology. The electronic rearview mirror system includes a plurality of displays: a display 1, a display 2, ..., and a display m, where m is a positive integer, and m≥2. The plurality of displays may be configured to display images obtained after the first controller and/or the second controller perform/performs image processing on information about images collected by the plurality of cameras.

It should be noted that, the first controller is not an electronic rearview mirror ECU that is separately deployed, but is a reused controller of another in-vehicle system different from the electronic rearview mirror system on the vehicle. In addition, the HMI display is also a reused HMI display of another in-vehicle system on the vehicle.

In a possible design solution, that the first controller is further configured to serve as a controller of an in-vehicle system different from the electronic rearview mirror system includes: The first controller is further configured to serve as a controller of an ADAS.

That is, the first controller may be a reused controller of the ADAS.

It should be noted that, when the ADAS includes two controllers (one controller may serve as a primary controller, and the other controller may serve as a secondary controller), the secondary controller of the ADAS is reused as the first controller in the electronic rearview mirror system, or the primary controller of the ADAS is reused as the first controller in the electronic rearview mirror system. This is not limited in this embodiment of this application.

In another possible design solution, that the first controller is further configured to serve as a controller of an in-vehicle system different from the electronic rearview mirror system includes: The first controller is further configured to serve as a controller of an IVI system.

That is, the first controller may be a reused controller of the IVI system.

Optionally, the first controller is further configured to perform fault detection to determine that at least one of the following is faulty: one or more of the plurality of cameras, the left visual field display, or the right visual field display.

The first controller may be further configured to perform fault detection. The first controller may perform fault detection on one or more of the plurality of cameras, the left visual field display, or the right visual field display, to determine whether the one or more of the plurality of cameras, the left visual field display, or the right visual field display is faulty. This is not limited in this embodiment of this application.

In a possible design solution, the plurality of cameras include at least one left camera and at least one right camera. The at least one left camera is configured to collect the image at the left rearview angle, and the at least one right camera is configured to collect the image at the right rearview angle. The plurality of displays include a left visual field display, a right visual field display, and an HMI display. The left visual field display is configured to display the image obtained after the image processing is performed on the information about the image at the left rearview angle. The right visual field display is configured to display the image obtained after the image processing is performed on the information about the image at the right rearview angle. The HMI display is configured to: when the left visual field display is faulty, display the image obtained after the image processing is performed on the information about the image at the left rearview angle, and/or configured to: when the right visual field display is faulty, display the image obtained after the image processing is performed on the information about the image at the right rearview angle. The left visual field display, the right visual field display and the HMI display are all connected to the first controller.

FIG. 13 is still another block diagram of an electronic rearview mirror system including two cameras according to an embodiment of this application.

For example, as shown in FIG. 13, the electronic rearview mirror system includes a left camera, a right camera, a left visual field display, a right visual field display, an HMI display, and a first controller. The left camera, the right camera, the left visual field display, the right visual field display, and the HMI display are all connected to the first controller.

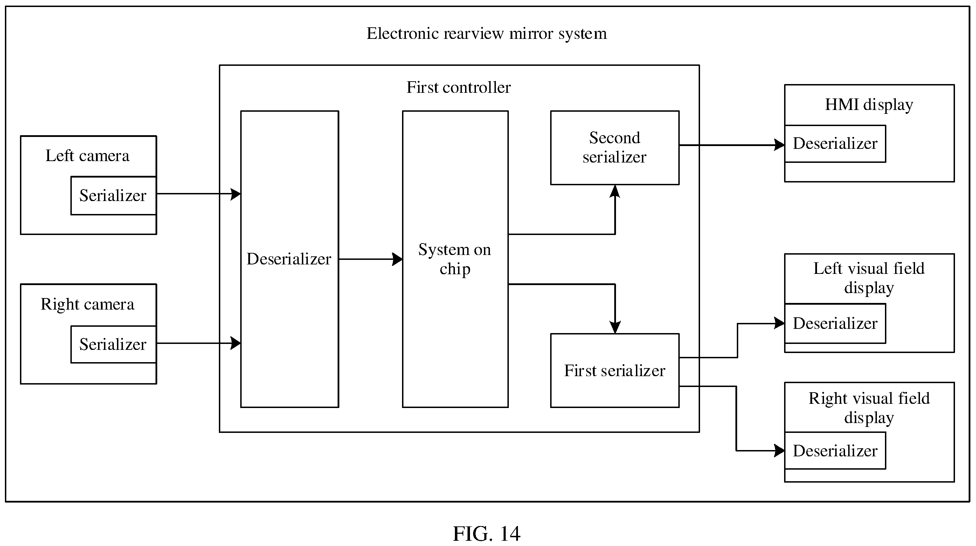

FIG. 14 is still another more detailed block diagram of the electronic rearview mirror system including two cameras according to an embodiment of this application.

As shown in FIG. 14, a single-interface serializer may be configured in each of the left camera and the right camera. In this case, a dual-interface deserializer may be configured in the first controller. The left camera may transmit information about a collected image to the system on chip in the first controller by using the deserializer via a serializer disposed in the left camera, and the right camera may transmit information about the collected image to the system on chip in the first controller by using the deserializer by via a serializer disposed in the right camera, and then the system on chip performs image processing on the information about the image.

After the image processing is completed, processed information may be transmitted to the display. For example, when a deserializer is configured in each of the left visual field display and the right visual field display, the first controller may transmit, to the left visual field display by using the first dual-interface serializer, information, obtained after image processing, about an image at a left rearview angle, and transmit information, obtained after image processing, about an image at a right rearview angle to the right visual field display.

When the left visual field display is faulty (including a case in which the deserializer configured in the left visual field display is faulty) or the first serializer of the first controller is faulty, the left camera may collect an image at a left rearview angle outside a vehicle. After the system on chip in the first controller performs image processing on information about the image collected by the left camera, the system on chip transmits processed information to the HMI display by using the second serializer.

When the right visual field display is faulty (including a case in which the deserializer configured in the right visual field display is faulty) or the first serializer of the first controller is faulty, the right camera may collect an image at a right rearview angle outside a vehicle. After the system on chip in the first controller performs image processing on information about the image collected by the right camera, the system on chip transmits processed information to the HMI display by using the second serializer.

As an example rather than a limitation, in an actual application scenario, when the first controller is a reused controller of the IVI system, the system on chip in the first controller may directly transmit information obtained after the image processing to the HMI display of the IVI system by using the second serializer. When the first controller is a reused controller of the ADAS, the system on chip in the first controller may transmit information obtained after image processing to the IVI system by using the second serializer, and then display the information on the HMI display of the IVI system. Alternatively, the system on chip in the first controller may forward information obtained after image processing to the IVI system by using automotive Ethernet, and then display the information on the HMI display of the IVI system. This is not limited in this embodiment of this application.

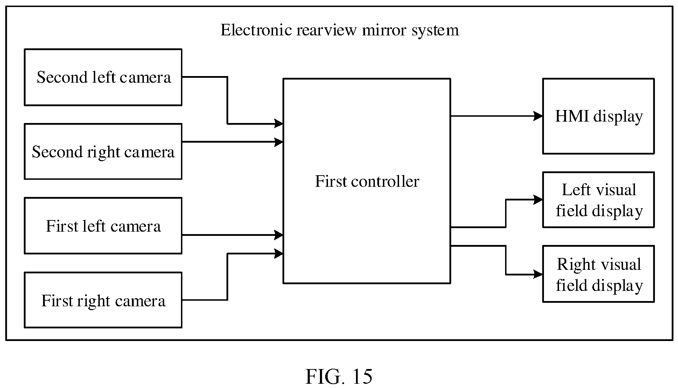

FIG. 15 is yet another block diagram of an electronic rearview mirror system including four cameras according to an embodiment of this application.

For another example, as shown in FIG. 15, the electronic rearview mirror system includes a first left camera, a second left camera, a first right camera, a second right camera, a left visual field display, a right visual field display, an HMI display, and a first controller. The first left camera, the second left camera, the first right camera, the second right camera, the left visual field display, the right visual field display, and the HMI display are all connected to the first controller.

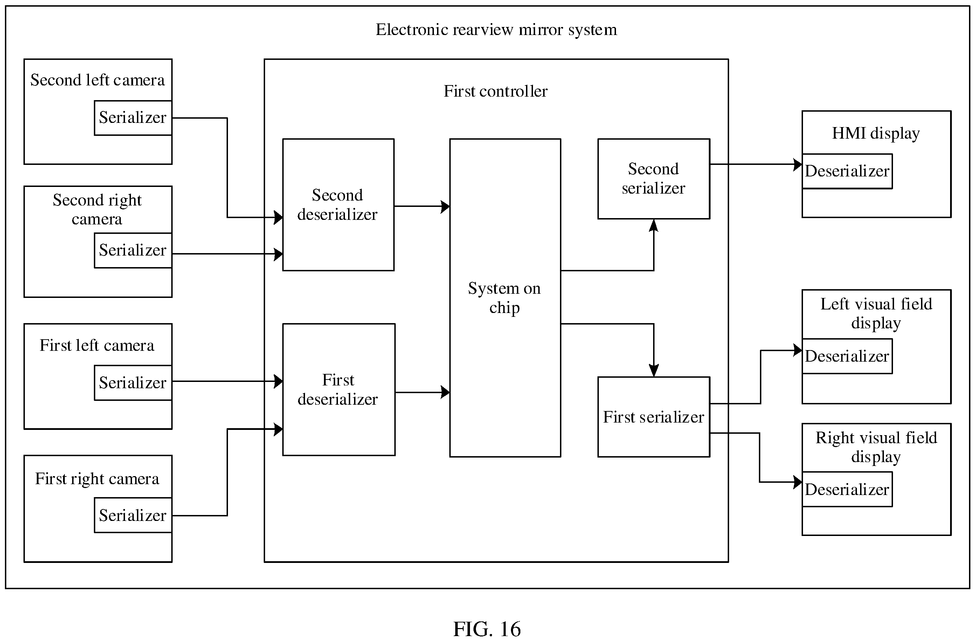

FIG. 16 is still another more detailed block diagram of the electronic rearview mirror system including four cameras according to an embodiment of this application.

As shown in FIG. 16, a single-interface serializer may be configured in each of the first left camera, the second left camera, the first right camera, and the second right camera. In this case, the first controller may be configured with two dual-interface deserializers, for example, a first deserializer and a second deserializer shown in the figure. The first left camera may transmit information about a collected image to the system on chip in the first controller by using the first deserializer via the serializer disposed in the first left camera, and the second left camera may transmit the information about the collected image to the system on chip in the first controller by using the second deserializer via the serializer disposed in the second left camera. Similarly, the first right camera may transmit information about the collected image to the system on chip in the first controller by using the first deserializer via the serializer disposed in the first right camera, and the second right camera may transmit information about the collected image to the system on chip in the second controller by using the second deserializer via the serializer disposed in the second right camera. Then, the system on chip in the first controller performs image processing on the information about the image.

After the image processing is completed, processed information may be transmitted to the display. For example, when a deserializer is configured in each of the left visual field display and the right visual field display, the first controller may transmit, to the left visual field display by using the first dual-interface serializer, information, obtained after image processing, about an image at a left rearview angle, and transmit information, obtained after image processing, about an image at a right rearview angle to the right visual field display.

When the first left camera is faulty (including a case in which the serializer configured in the first left camera is faulty), the second left camera may replace the first left camera to collect an image at a left rearview angle outside a vehicle. When the first right camera is faulty (including a case in which the serializer configured in the first right camera is faulty), the second right camera may replace the first right camera to collect an image at a right rearview angle outside the vehicle.

When a first decoder in the first controller is faulty, the second left camera may replace the first left camera to collect the image at the left rearview angle outside the vehicle, and the second right camera may replace the first right camera to collect the image at the right rearview angle outside the vehicle.

When the left visual field display is faulty (including a case in which the deserializer configured in the left visual field display is faulty) or the first serializer of the first controller is faulty, the system on chip in the first controller may perform image processing on information about the image at the left rearview angle outside the vehicle, and the system on chip transmits processed information to the HMI display by using the second serializer.

When the right visual field display is faulty (including a case in which the deserializer configured in the right visual field display is faulty) or the first serializer of the first controller is faulty, the system on chip in the first controller may perform image processing on information about the image at the right rearview angle outside the vehicle, and the system on chip transmits processed information to the HMI display by using the second serializer.

In addition, it should be noted that, as an example rather than a limitation, in an actual application scenario, when the first controller is a reused controller of the IVI system, the system on chip in the first controller may directly transmit information obtained after the image processing to the HMI display of the IVI system by using the second serializer. When the first controller is a reused controller of the ADAS, the system on chip in the first controller may transmit information obtained after image processing to the IVI system by using the second serializer, and then display the information on the HMI display of the IVI system. Alternatively, the system on chip in the first controller may forward information obtained after image processing to the IVI system by using automotive Ethernet, and then display the information on the HMI display of the IVI system. This is not limited in this embodiment of this application.

Based on the foregoing solution, a controller of another in-vehicle system on the vehicle is reused to implement a function of the electronic rearview mirror. The electronic rearview mirror ECU does not need to be separately deployed, so that costs of the electronic rearview mirror ECU are reduced, and costs of deploying the electronic rearview mirror system on the vehicle can be reduced. In addition, an HMI display of another in-vehicle system on the vehicle is reused, to improve reliability of the electronic rearview mirror system.

It should be understood that FIG. 2 to FIG. 16 are merely examples, and arrow directions in the figures may indicate a flow direction of data, information, or the like, and cannot limit a circuit connection between the electronic rearview mirror system in an actual application scenario and another in-vehicle system (for example, an ADAS or an IVI system) different from the electronic rearview mirror system. In addition, the flow direction of data, information, or the like, of the electronic rearview mirror system shown in the figure is not limited to a flow direction of data or information of another in-vehicle system (for example, an ADAS or an IVI system) different from the electronic rearview mirror system in an actual application scenario.

An embodiment of this application further provides a vehicle. The vehicle includes the electronic rearview mirror system described above.

Optionally, the vehicle is configured to determine a steering intention of a user based on an operation of the user, and display, based on the electronic rearview mirror system, an image that is at a rearview angle and that corresponds to the steering intention.

It should be understood that the steering intention of the user may include turning right or turning left. The displaying an image that is at a rearview angle and that corresponds to the steering intention may be understood as: if the steering intention of the user is turning right, displaying an image at a right rearview angle; or if the steering intention of the user is turning left, displaying an image at a left rearview angle.

It should be noted that the operation of the user may include shifting a left/right turn light shift lever, operating on an HMI display, sending a predefined control voice, making a predefined control gesture, or the like. This is not limited in this embodiment of this application.

It should be further noted that in some possible implementations, the image at the corresponding rearview angle may not be displayed based on the steering intention of the user, but the image at the left rearview angle and the image at the right rearview angle are displayed together. This is not limited in this embodiment of this application.

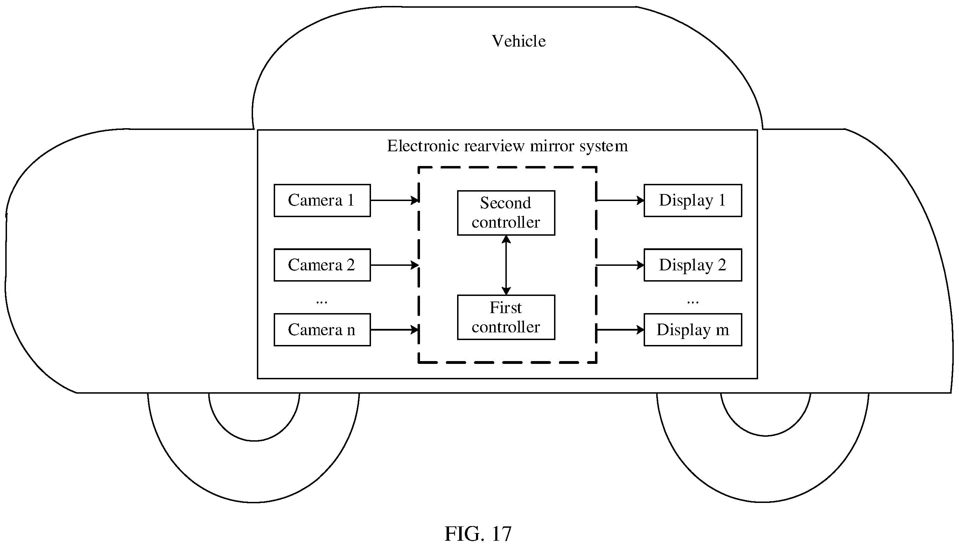

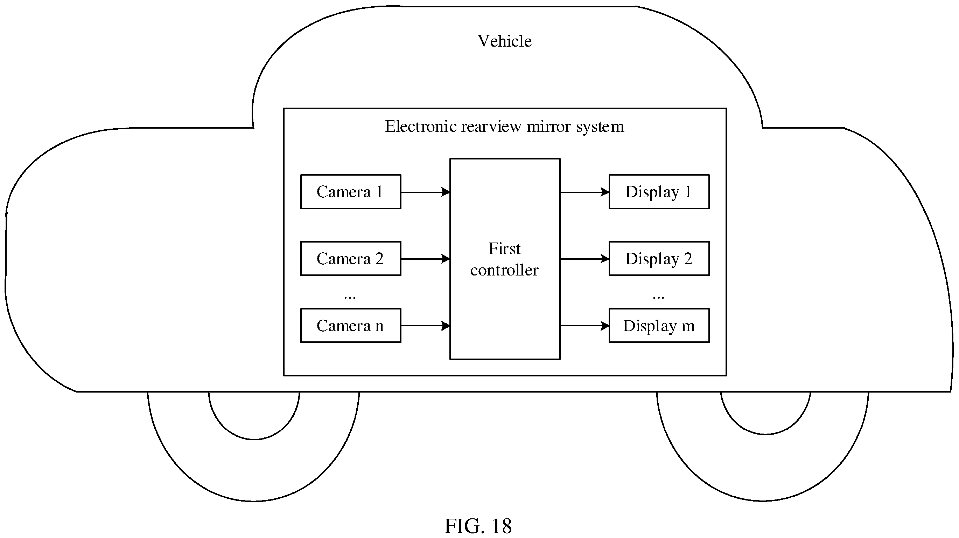

FIG. 17 and FIG. 18 are two diagrams of a vehicle according to an embodiment of this application.

As an example rather than a limitation, as shown in FIG. 17, the vehicle provided in this embodiment of this application may include the electronic rearview mirror system shown in FIG. 2.

For example, in the electronic rearview mirror system deployed on the vehicle, when the left/right visual field display cannot display the image at the left/right rearview angle outside the vehicle due to a failure of at least one component, the driver may control a shift lever by using a left/right turn light (or performing an operation on an HMI interface like a central control screen or an instrument screen, or using a control manner like a predefined control voice or a predefined control gesture), to notify the first controller or the second controller of a turning intention. After performing image processing on the information about the image at the left/right rearview angle outside the vehicle, the first controller or the second controller may display processed information on an HMI display like a central control screen or an instrument screen, to ensure reliability of the electronic rearview mirror system.

As an example rather than a limitation, as shown in FIG. 18, the vehicle provided in this embodiment of this application may include the electronic rearview mirror system shown in FIG. 12.

For example, in the electronic rearview mirror system deployed on the vehicle, when the left/right visual field display cannot display the image at the left/right rearview angle outside the vehicle due to a failure of at least one component, the driver may control a shift lever by using a left/right turn light (or performing an operation on an HMI interface like a central control screen or an instrument screen, or using a control manner like a predefined control voice or a predefined control gesture), to notify the first controller of a turning intention. After performing image processing on the information about the image at the left/right rearview angle outside the vehicle, the first controller may display processed information on an HMI display like a central control screen or an instrument screen, to ensure reliability of the electronic rearview mirror system.

A person of ordinary skill in the art may be aware that, the illustrative logical blocks (illustrative logical block) and circuits described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. There may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid-state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic rearview mirror system, wherein the system comprises:
a plurality of cameras, configured to collect an image at a left rearview angle and an image at a right rearview angle outside a vehicle;
a first controller and a second controller, configured to: obtain information about the images from the plurality of cameras and perform image processing on the information, wherein the first controller and the second controller are further configured to serve as controllers of an in-vehicle system different from the electronic rearview mirror system; and
a plurality of displays, configured to display images obtained after the image processing.

2. The system according to claim 1, wherein that the first controller and the second controller are further configured to serve as controllers of an in-vehicle system different from the electronic rearview mirror system comprises:
the first controller and the second controller are further configured to serve as controllers of an advanced driver assistance system ADAS; or
the first controller is further configured to serve as a controller of an ADAS, and the second controller is further configured to serve as a controller of an in-vehicle infotainment IVI system.

3. The system according to claim 1 or 2, wherein the plurality of cameras comprise:
at least one left camera, configured to collect the image at the left rearview angle; and
at least one right camera, configured to collect the image at the right rearview angle; and
the plurality of displays comprise:
a left visual field display, configured to display the image obtained after the image processing is performed on the information about the image at the left rearview angle;
a right visual field display, configured to display the image obtained after the image processing is performed on the information about the image at the right rearview angle; and
a human-machine interaction HMI display, configured to: when the left visual field display is faulty, display the image obtained after the image processing is performed on the information about the image at the left rearview angle, and/or configured to: when the right visual field display is faulty, display the image obtained after the image processing is performed on the information about the image at the right rearview angle, wherein
both the left visual field display and the right visual field display are connected to the first controller, the HMI display is connected to the second controller, and the first controller is connected to the second controller.

4. The system according to claim 3, wherein both the at least one left camera and the at least one right camera are connected to the first controller and the second controller.

5. The system according to claim 3, wherein the at least one left camera comprises a first left camera and a second left camera, and the at least one right camera comprises a first right camera and a second right camera;
the first left camera is configured to collect the image at the left rearview angle;
the second left camera is configured to collect the image at the left rearview angle when the first left camera or the left visual field display is faulty;
the first right camera is configured to collect the image at the right rearview angle; and
the second right camera is configured to collect the image at the right rearview angle when the first right camera or the right visual field display is faulty, wherein
both the first left camera and the first right camera are connected to the first controller, and both the second left camera and the second right camera are connected to the second controller.

6. The system according to any one of claims 1 to 5, wherein the first controller and the second controller are packaged in different boxes or a same box.

7. The system according to any one of claims 3 to 6, wherein the second controller is further configured to perform fault detection to determine that at least one of the following is faulty: one or more of the plurality of cameras, the first controller, the left visual field display, or the right visual field display.

8. An electronic rearview mirror system, wherein the system comprises:
a plurality of cameras, configured to collect an image at a left rearview angle and an image at a right rearview angle outside a vehicle;
a first controller, configured to: obtain information about the images from the plurality of cameras and perform image processing on the information, wherein the first controller is further configured to serve as a controller of an in-vehicle system different from the electronic rearview mirror system; and
a plurality of displays, configured to display images obtained after the image processing.

9. The system according to claim 8, wherein that the first controller is further configured to serve as a controller of an in-vehicle system different from the electronic rearview mirror system comprises:
the first controller is further configured to serve as a controller of an advanced driver assistance system ADAS; or
the first controller is further configured to serve as a controller of an in-vehicle infotainment IVI system.

10. The system according to claim 8 or 9, wherein the plurality of cameras comprise:
at least one left camera, configured to collect the image at the left rearview angle; and
at least one right camera, configured to collect the image at the right rearview angle; and
the plurality of displays comprise:
a left visual field display, configured to display the image obtained after the image processing is performed on the information about the image at the left rearview angle;
a right visual field display, configured to display the image obtained after the image processing is performed on the information about the image at the right rearview angle; and
a human-machine interaction HMI display, configured to: when the left visual field display is faulty, display the image obtained after the image processing is performed on the information about the image at the left rearview angle, and/or configured to: when the right visual field display is faulty, display the image obtained after the image processing is performed on the information about the image at the right rearview angle, wherein
the left visual field display, the right visual field display, and the HMI display are all connected to the first controller.

11. The system according to claim 10, wherein the first controller is further configured to perform fault detection to determine that at least one of the following is faulty: one or more of the plurality of cameras, the left visual field display, or the right visual field display.

12. A vehicle, wherein the vehicle comprises the electronic rearview mirror system according to any one of claims 1 to 7, or the vehicle comprises the electronic rearview mirror system according to any one of claims 8 to 11.
